(19) Europäisches Patentamt
European Patent Office
Office européen des brevets

(11) Numéro de publication: **0 089 877**
**B1**

(12) **FASCICULE DE BREVET EUROPEEN**

(45) Date de publication du fascicule du brevet: **17.09.86**

(51) Int. Cl.⁴: **C 08 F 257/02**, C 08 F 279/02, D 21 H 1/28

(21) Numéro de dépôt: **83400516.7**

(22) Date de dépôt: **14.03.83**

(54) **Latex d'interpolymère, procédé pour le préparer et applications notamment pour le couchage du papier.**

(30) Priorité: **24.03.82 FR 8204989**

(43) Date de publication de la demande: **28.09.83 Bulletin 83/39**

(45) Mention de la délivrance du brevet: **17.09.86 Bulletin 86/38**

(84) Etats contractants désignés: **AT BE CH DE FR GB IT LI LU NL SE**

(56) Documents cités:
**FR - A - 2 128 356**
**US - A - 4 265 977**

(73) Titulaire: **RHONE-POULENC SPECIALITES CHIMIQUES, "Les Miroirs" 18, Avenue d'Alsace, F-92400 Courbevoie (FR)**

(72) Inventeur: **Reeb, Roland, 52, avenue du Parc, F-93290 Tremblay-lès-Gonesse (FR)**
Inventeur: **Chauvel, Bernard, 24, Chemin de la Commanderie, F-95120 Ermont (FR)**

(74) Mandataire: **Fabre, Madeleine-France et al, RHONE-POULENC INTERSERVICES Service Brevets Chimie 25, quai Paul Doumer, F-92408 Courbevoie Cédex (FR)**

**EP 0 089 877 B1**

Il est rappelé que: *Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).*

## Description

La présente invention concerne des latex d'interpolymère ainsi qu'un procédé pour les obtenir.

Elle concerne également les applications de ces latex notamment comme liants, plus particulièrement dans le couchage du papier.

Le brevet américain no 4 265 977 décrit une composition pour couchage du papier contenant comme liant un latex d'un interpolymère obtenu par polymérisation en émulsion de 10 à 90 parties d'un mélange de monomères contenant 10–60% en poids d'un acide carboxylique éthylénique insaturé et 40–90% en poids d'un monomère oléfinique copolymérisable en présence de 10 à 90 parties d'un latex d'un copolymère butadiène-styrène de préférence carboxylé.

La demanderesse a trouvé un nouveau latex d'interpolymère utilisable dans le même domaine d'application mais présentant des performances, notamment de résistance à l'arrachage humide très nettement supérieures.

Les latex, objet de l'invention, sont des dispersions aqueuses de particules de diamètre compris entre 0,1 et 1 µm et, de préférence, moins de 0,5 µm d'un interpolymère composé d'un copolymère A de butadiène, de styrène et d'au moins un acide carboxylique insaturé éthylénique et d'un polymère B d'au moins un ester haloalkylique ou haloacétoxyalkylique d'un acide mono- ou di-carboxylique à insaturation éthylénique greffé sur le copolymère A.

Dans un but de simplification les termes «ester haloalkylique» désignent ci-après aussi bien les esters haloalkyliques ou haloacétoxyalkyliques de monoacides carboxyliques que les mono ou diesters haloalkyliques ou haloacétoxyalkyliques de diacides carboxyliques ou leurs mélanges.

L'interpolymère est de préférence composé de 85 à 99% en poids de copolymère A et de 15 à 1% en poids de polymère B.

Le copolymère A est constitué, en poids, de 15 à 85% de butadiène, 5 à 84% de styrène et 1 à 10% d'au moins un acide carboxylique insaturé éthylénique et, de préférence, 25 à 55% de butadiène, 35 à 74% de styrène et 2 à 5% d'au moins un acide carboxylique insaturé éthylénique.

Le copolymère B comprend en poids 15 à 100% d'ester haloalkylique et 0 à 85% d'au moins un composé insaturé éthylénique copolymérisable avec l'ester haloalkylique.

Selon l'invention, l'ester haloalkylique peut être représenté par la formule générale: RCOOZ, formule dans laquelle Z représente:

le radical $-C_nH_{2n-m+1}X_m$ dans lequel X représente un atome d'halogène, de préférence, le chlore et/ou le brome, n est un nombre entier allant de 1 à 6 et, de préférence de 1 à 4, m est un nombre entier allant de 1 à 5 et, de préférence de 1 à 3;

– ou le radical $-(CH_2-CHY)_n-OOC-CH_{(3-m')}X_m$ dans lequel X a la même définition que ci-dessus, n'est un nombre entier de 1 à 4, m' est un nombre entier de 1 à 3, et Y représente un atome d'hydrogène ou un groupe méthyle;

– R représente:

– un groupement alcényle linéaire ou ramifié en $C_2$–$C_4$

– un groupement chloroalcényle linéaire ou ramifié en $C_2$–$C_4$

– ou un radical $-R'-COOZ'$ où Z' représente un atome d'hydrogène ou le radical Z, R' représente un groupement alcénylène linéaire ou ramifié en $C_2$–$C_4$, un groupement chloroalcénylène linéaire ou ramifié en $C_2$–$C_4$ ou un groupement $CH_2=C-CH_2-$
|

Les esters haloalkyliques peuvent être choisis parmi ceux dérivés d'acides carboxyliques à insaturation éthylénique qui possèdent jusqu'à 6 atomes de carbone tels que les acides: acrylique, méthacrylique, itaconique, crotonique, fumarique, maléique, mésaconique et glutaconique, ainsi que leurs dérivés chlorés tels que les acides chloroacrylique, chlorofumarique, chloromaléique et chloroitaconique.

Selon une forme de réalisation de l'invention, la partie de l'interpolymère insoluble dans l'alcool isopropylique représente au moins 75%, de préférence 90 à 95% de l'interpolymère et comprend, à l'état greffé, 0,2 à 15% en poids (de préférence de 0,5 à 5% en poids) de l'ester haloalkylique.

La teneur pondérale en matières sèches des latex, objet de l'invention, est généralement comprise entre 1 et 70% et, de préférence, entre 30 et 55%.

Parmi les acides carboxyliques insaturés éthyléniques entrant dans la composition du copolymère A et, éventuellement du polymère B, on peut citer notamment, les acides acrylique, méthacrylique, crotonique, maléique, fumarique, itaconique, mésaconique et glutaconique ou des mélanges d'au moins 2 de ces acides.

Comme composés copolymérisables avec l'ester haloalkylique, on peut citer notamment les composés vinylaromatiques, les halogénures de vinyle, les halogénures de vinylidène, les composés diéniques, les esters vinyliques d'acide carboxylique, les composés acryliques. On peut citer plus particulièrement le styrène, l'α-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, les acides: acrylique, méthacrylique, maléique, fumarique, itaconique et les dérivés chlorés de ces acides, l'acrylamide, le méthacrylamide, le nitrile acrylique, le nitrile méthacrylique, le chloroacrylonitrile, l'acétate de vinyle, les esters de l'acide acrylique tels que l'acrylate de méthyle, l'acrylate d'éthyle, l'acrylate d'hydroxyéthyle, l'acrylate d'hydroxypropyle, l'acrylate de n-butyle, l'acrylate d'isobutyle, les esters de l'acide méthacrylique tels que le méthacrylate de méthyle, le méthacrylate d'éthyle, le méthacrylate d'hydroxyéthyle, le

méthacrylate d'hydroxypropyle, le méthacrylate de n-butyle, le méthacrylate d'isobutyle.

Le procédé d'obtention des latex, selon l'invention, consiste à préparer un latex de copolymère A par polymérisation en émulsion de butadiène, de styrène et d'au moins un acide carboxylique insaturé éthylénique, puis à polymériser, en présence du latex de copolymère A, l'ester haloalkylique et éventuellement au moins un composé insaturé éthylénique copolymérisable avec l'ester haloalkylique.

Le latex de copolymère A est préparé de façon en soi connue par polymérisation en émulsion aqueuse de butadiène, de styrène et d'au moins un acide carboxylique insaturé éthylénique, en présence d'au moins un initiateur et d'au moins un agent émulsifiant avec une concentration en mélange des monomères dans le milieu réactionnel comprise généralement entre 20 et 60% en poids.

Selon une forme de réalisation de l'invention, on introduit l'ester haloalkylique seul ou en présence d'au moins un autre composé éthylénique au cours de la polymérisation des comonomères de A et, de préférence, après avoir copolymérisé les comonomères de A à au moins 50% de taux de conversion en copolymère A.

Dans la préparation du copolymère A, le butadiène représente généralement entre 15 et 85% et, de préférence, entre 25 et 55% en poids du total des monomères à polymériser. Le styrène représente généralement entre 5 et 84% et, de préférence, entre 35 et 74% en poids du total des monomères à polymériser. La quantité d'acide carboxylique mise en œuvre est généralement comprise entre 1 et 10% et, de préférence, de 2 à 5% en poids par rapport au total des monomères à polymériser.

Les monomères mis en œuvre peuvent être introduits en mélange ou séparément et simultanément dans le milieu réactionnel, soit avant le début de la polymérisation en une seule fois, soit au cours de la polymérisation par fractions successives ou en continu.

En tant qu'agent émulsifiant, on met en œuvre les agents anioniques classiques représentés notamment par les sels d'acides gras, les alkylsulfates, les alkylsulfonates, les arylsulfates, les arylsulfonates, les alkylarylsulfates, les alkylarylsulfonates, les sulfosuccinates, les alkylphosphates de métaux alcalins, les sels de l'acide abiétique hydrogénés ou non. Ils sont employés à raison de 0,01 à 5% en poids par rapport au total des monomères.

L'initiateur, qui est hydrosoluble, est représenté plus particulièrement par les hydroperoxydes tels que l'eau oxygénée, l'hydroperoxyde de cumène, l'hydroperoxyde de diisopropylbenzène, l'hydroperoxyde de paramanthane, et par les persulfates tels que le persulfate de sodium, le persulfate de potassium, le persulfate d'ammonium. Il est employé en quantités comprises entre 0,05 et 2% en poids par rapport au total des monomères. Ces initiateurs sont éventuellement associés à un réducteur, tel que le bisulfite ou le formaldéhydesulfoxylate de sodium, les polyéthylèneamines, les sucres: dextrose, saccharose, les sels métalliques. Les quantités de réducteur utilisées varient de 0 à 3% en poids par rapport au total des monomères.

La température de réaction, fonction de l'initiateur mis en œuvre, est généralement comprise entre 0 et 110°C, et de préférence, entre 25 et 90°C.

La polymérisation de l'ester haloalkylique et éventuellement d'un composé copolymérisable avec l'ester haloalkylique, en présence du copolymère A est effectuée en émulsion aqueuse en présence ou non d'un agent émulsifiant, d'un initiateur de polymérisation et éventuellement d'un agent de transfert avec une concentration du total copolymère A + monomère(s) dans le milieu réactionnel comprise entre 20 et 70% en poids.

La quantité de latex de copolymère A mis en œuvre est telle que le copolymère A représente généralement 80 à 99% en poids du total copolymère A + monomère(s).

L'initiateur, identique à ou différent de celui mis en œuvre pour la préparation du copolymère A, est choisi parmi les initiateurs mentionnés plus haut. Il est employé en quantités comprises entre 0,05 et 6% en poids par rapport au(x) monomère(s).

L'agent émulsifiant présent dans le latex de copolymère A est généralement suffisant pour maintenir la stabilité de l'émulsion au cours de la polymérisation. Cependant, dans certains cas, il peut être utile d'ajouter un supplément d'agent émulsifiant identique à ou différent de celui utilisé pour la préparation du copolymère A. Cet agent émulsifiant est choisi dans la liste donnée précédemment. Il est introduit à raison de 0 à 2,5% en poids par rapport au total copolymère A + monomère (s).

L'agent de transfert mis en œuvre dans des proportions allant de 0 à 3% en poids par rapport au(x) monomère(s) est généralement choisi parmi les mercaptans tels que le N-dodécylmercaptan, le tertiododécylmercaptan; le cyclohexène; les hydrocarbures halogénés tels que le chloroforme, le bromoforme, le tétrachlorure de carbone. Il permet de régler la proportion de polymère greffé et la longueur des chaînes moléculaires greffées. Il est ajouté au milieu réactionnel soit avant la polymérisation, soit en cours de polymérisation.

La température de réaction, fonction du monomère copolymérisable avec l'ester haloalkylique et de l'initiateur mis en œuvre, est généralement comprise entre 0 et 110°C et, de préférence, entre 25 et 90°C.

Les latex selon l'invention sont utilisables notamment comme liants pour la préparation des compositions aqueuses pour couchage du papier et plus particulièrement du papier pour impression offset.

On sait que les compositions aqueuses pour couchage du papier contiennent en principe des pigments et des liants. Le pigment le plus couramment utilisé est l'argile minérale. On peut

également utiliser, en faible proportion par rapport à l'argile minérale, d'autres pigments tels que du carbonate de calcium, de l'oxyde de titane, du blanc satin, de l'hydrargillite, du talc, du sulfate de baryum. Ces pigments sont mis en dispersion dans l'eau, généralement en milieu alcalin et en présence d'agents dispersants dont les plus importants sont le pyrophosphate tétrasodique, l'hexamétaphosphate de sodium, les polyacrylates de bas poids moléculaire à des taux compris entre 0,2 et 0,5% en poids par rapport aux pigments. Ces pigments sont fixés au papier par l'intermédiaire de liants. On a déjà proposé, comme liants pour cette application, des latex aqueux d'un polymère synthétique tel qu'un copolymère de butadiène et de styrène, un copolymère carboxylé de butadiène et de styrène, un polymère acrylique ou un polymère d'acétate de vinyle, employés soit seuls soit en mélange avec des liants naturels tels qu'amidons, protéines, caséines, ou synthétiques tels que les alcools polyvinyliques. Une catégorie de liants synthétiques particulièrement intéressante est constituée par les latex de copolymères carboxylés de butadiène et de styrène comprenant en poids 30 à 50% de butadiène, 40 à 68% de styrène et 2 à 10% d'au moins un acide carboxylique insaturé éthylénique. Il est également possible d'associer aux latex des produits capables d'améliorer les propriétés de rétention d'eau des compositions de couchage tels que des carboxyméthylcelluloses ou des alginates.

Les compositions de couchage peuvent contenir enfin d'autres ingrédients divers tels que notamment des agents de réticulation, des agents antimousses, des agents glissants, des azurants optiques.

Le couchage du papier à l'aide des compositions aqueuses est réalisé au moyen d'une machine à coucher selon diverses techniques mettant en œuvre divers dispositifs parmi lesquels on peut citer ceux connus industriellement sous les appellations suivantes: la lame d'air, la size press, la coucheuse Champion, la coucheuse Massey, la racle traînante. Après couchage, le papier subit une opération de séchage suivie généralement d'une opération de calandrage.

Parmi les propriétés que doit posséder le papier couché pour impression offset, la résistance à l'arrachage humide présente une importance particulière. Le procédé d'impression offset, qui est basé sur la répulsion de l'eau par les encres grasses, emploie en fait de l'eau. En impression offset quadrichromique, on est par suite amené à imprimer la deuxième, la troisième ou quatrième couleur à un endroit préalablement mouillé. Il importe donc, pour éviter les phénomènes d'arrachage à l'état humide, qui se traduisent par un encrassement du blanchet et des presses offset, que le papier possède une résistance à l'arrachage humide suffisante.

Les latex selon l'invention conduisent à un papier couché de résistance à l'arrachage humide plus élevée que les latex des copolymères A correspondants.

Les exemples 1 à 8 qui suivent, dans lesquels les parties sont indiquées en poids, sont destinés à illustrer l'invention.

Exemples 1 à 11

Préparation du copolymère A

Dans un autoclave en acier inoxydable, muni d'un agitateur, on introduit:

- 43 parties de butadiène,
- 53 parties de styrène,
- 100 parties d'eau désionisée,
- 2 parties d'acide acrylique,
- 2 parties d'acide itaconique,
- 0,5 partie de laurylsulfate de sodium,
- 0,8 partie de persulfate d'ammonium.

On chauffe le mélange réactionnel à 75°C et maintient cette température pendant la durée de la réaction. Après 10 heures de réaction, le taux de transformation est de l'ordre de 98%. On dégaze le butadiène qui n'a pas réagi. Les particules du latex obtenu ont un diamètre d'environ 0,15 µm et une composition sensiblement équivalente à celle des produits mis en œuvre.

Polymérisation en présence du copolymère A

Dans un autoclave en acier inoxydable, muni d'un agitateur, on introduit le nombre de parties de copolymère A (sous forme du latex correspondant préparé précédemment), et respectivement de bis(2-chloroéthyl)itaconate, bis(2-chloroéthyl)fumarate, bis(1,3-dichloroisopropyl)itaconate, bis(2-chloroéthyl)maléate, 2-chloroéthyl itaconate monoester, méthacrylate de chloroacétoxyéthyle, méthacrylate de dichloroacétoxyéthyle et méthacrylate de trichloroacétoxyéthyle, et, éventuellement de styrène indiqué, pour chaque exemple, dans les tableaux 1, 1′ et 1″.

Tableau 1

| Exemple | 1 | 2 | 3 | 4 | Témoin |
|---|---|---|---|---|---|
| Copolymère A | 96 | 96,2 | 95,8 | 96 | 98,8 |
| bis(2-chloroéthyl) itaconate | 4 | 3,8 | 3 | – | – |
| bis(2-chloroéthyl) fumarate | – | – | – | 2,8 | – |
| Styrène | – | – | 1,2 | 1,2 | 1,2 |
| Persulfate de potassium | 0,16 | 0,15 | 0,17 | 0,16 | 0,05 |

Tableau 1′

| Exemple | 5 | 6 | 7 | 8 | Témoin |
|---|---|---|---|---|---|
| Copolymère A | 96 | 95,8 | 95,8 | 95,8 | 98,8 |
| bis(1,3-dichloroisopropyl) itaconate | 4 | 3 | – | – | – |
| bis(2-chloroéthyl) maléate | – | – | 3 | – | – |
| 2-chloroéthyl itaconate monoester | – | – | – | 3 | – |
| Styrène | – | 1,2 | 1,2 | 1,2 | 1,2 |
| Persulfate de potassium | 0,16 | 0,17 | 0,17 | 0,17 | 0,05 |

Tableau 1″

| Exemple | 9 | 10 | 11 | Témoin |
|---|---|---|---|---|
| Copolymère A | 96 | 96 | 96 | 98,8 |
| Chloroacétoxyéthyl méthacrylate | 4 | – | – | – |
| Dichloroacétoxyéthyl méthacrylate | – | 4 | – | – |
| trichloroacétoxyéthyl méthacrylate | – | – | 4 | – |
| Styrène | – | – | – | 1,2 |
| Persulfate de potassium | 0,16 | 0,16 | 0,16 | 0,05 |

On ajoute également une quantité de potasse correspondant à la moitié de la quantité de persulfate de potassium à introduire.

On porte la température du milieu réactionnel à 75°C et introduit dans l'autoclave le nombre de parties, indiqué dans le tableau 1, de persulfate de potassium dissous dans 10 parties d'eau désionisée. On maintient cette température pendant 5 heures, on porte la température à 85°C et la maintient pendant 3 heures puis refroidit jusqu'à la température ambiante. On obtient un latex d'interpolymère selon l'invention.

Le tableau 2 ci-après indique pour chaque exemple, la teneur pondérale du latex d'interpolymère en matières sèches, la proportion d'interpolymère insoluble dans l'alcool isopropylique et la teneur pondérale en bis(2-chloroéthyl)-itaconate, -fumarate ou -maléate, en bis(1,3-dichloroisopropyl) itaconate, en 2-chloroéthyl itaconate monoester, en chloro-, dichloro-, ou trichloroacétoxy-éthylméthacrylate, présent à l'état greffé, de la partie de l'interpolymère insoluble dans l'alcool isopropylique.

Tableau 2

| Exemples | Teneur pondérale du latex d'interpolymère en matières sèches (%) | Proportion d'interpolymère insoluble dans l'alcool isopropylique (%) | Teneur pondérale en chloroalkylester à l'état greffé de la partie de l'interpolymère insoluble dans l'alcool isopropylique (%) |
|---|---|---|---|
| 1 | 40,5 | 92,5 | 0,8 |
| 2 | 40,8 | 93,6 | 1,7 |
| 3 | 40,6 | 93,7 | 1,5 |
| 4 | 40,4 | 94,4 | 2 |
| 5 | 40,1 | 94,3 | 2,6 |
| 6 | 40,6 | 94,8 | 2,4 |
| 7 | 40,0 | 92,6 | 0,9 |
| 8 | 41,2 | 92,9 | 0,3 |
| 9 | 37,5 | 95,6 | 2,9 |
| 10 | 40,8 | 94,2 | 1,3 |
| 11 | 41,1 | 94,4 | 0,7 |
| Témoin | 40,2 | 93,6 | – |

La proportion d'interpolymère insoluble dans l'alcool isopropylique est déterminée à l'aide de la méthode suivante:

A partir du latex à examiner, on prépare sur une plaque de verre un film de 15/100 mm d'épaisseur (mesurée à l'état humide) que l'on fait sécher 2

heures à la température ambiante puis 2 heures à l'étuve à 50°C. On prélève dans ce film un échantillon d'interpolymère de poids Po voisin de 200 mg que l'on place dans un sachet fabriqué à partir d'un papier filtre. On suspend le sachet contenant l'interpolymère pendant 7 heures dans de l'alcool isopropylique chauffé à reflux. Après égouttage et essorage du sachet sur papier filtre sec et élimination de l'alcool isopropylique par séjour de l'échantillon d'interpolymère à l'étuve à 110°C pendant 3 heures, on détermine le poids P dudit échantillon. La proportion d'interpolymère insoluble dans l'alcool isopropylique est donnée par le rapport P/Po exprimé en pourcentage.

La teneur pondérale en esterhaloalkylique présente à l'état greffé, de la partie de l'interpolymère insoluble dans l'alcool isopropylique est déterminée par dosage, selon les méthodes d'analyse élémentaire, du chore contenu dans ladite partie de l'interpolymère.

Application du latex d'interpolymère de l'invention au couchage du papier.

On prépare des compositions aqueuses de couchage et applique sur un papier, à l'aide d'une coucheuse à lame d'air, une couche de 20 g/m² exprimée en matières sèches, de chacune desdites compositions. On utilise un papier de 60 g/m². Le papier ainsi couché est séché dans un four tunner à la température de 120°C puis subit un calandrage consistant en quatre passages successifs entre deux cylindres sous une force de 80 kN par mètre.

Après séchage et calandrage, le papier couché est conditionné à la température de 23°C dans une atmosphère à 50% d'humidité relative puis examiné au point de vue résistance à l'arrachage humide. Cette résistance est déterminée à l'aide de l'appareil IGT mis au point par l'institut von Grafische Technik d'Amsterdam (Pays-Bas), dans lequel on met en contact un échantillon de papier couché, sur lequel on a au préalable déposé un mince film d'eau, avec une molette encreuse dont on règle la pression sur l'échantillon à une valeur choisie; la vitesse d'impression croît jusqu'à ce qu'on observe un début d'arrachage de la couche enduite. La résistance à l'arrachage humide est déterminée visuellement par comparaison avec d'autres échantillons. On utilise l'encre «3801» commercialisée par les Etablissements Lorilleux Lefranc (Paris). Les résultats sont exprimés par une note allant de 0 à 10. La résistance à l'arrachage humide est d'autant plus élevée que la note est plus près de 10, la note 0 correspondant à un papier présentant une très mauvaise résistance et la note 10 à un papier présentant une excellente résistance.

La mesure est faite immédiatement après préparation du papier couché, d'une part, sur échantillon non étuvé et, d'autre part, sur échantillon étuvé 5 minutes à 110°C.

Le tableau 3 ci-dessous indique la nature et la teneur en poids des constituants solides des compositions de couchage correspondant à chacun des exemples et à chacun des essais comparatifs réalisés en utilisant comme liant le latex du copolymère A correspondant ou l'interpolymère composé du copolymère A et du polymère de styrène (témoin du tableau 1).

Les compositions de couchage sont amenées à un pH de 8,5 par addition d'ammoniaque. Elles sont ajustées par addition d'eau de manière à contenir 60% en poids de matières sèches.

Tableau 3

| | Essais comparatifs (i) | (ii) | Exemples 1 à 11 |
|---|---|---|---|
| Kaolin | 100 | 100 | 100 |
| Hexamétaphosphate de sodium | 0,3 | 0,3 | 0,3 |
| Carboxyméthylcellulose | 0,3 | 0,3 | 0,3 |
| Latex de copolymère A (i) | 12 | - | - |
| Latex d'interpolymère du copolymère A et du polymère de styrène (ii) | - | 12 | - |
| Latex d'interpolymère selon l'invention | - | - | 12 |

Les tableaux 4 et 5 suivants indiquent les valeurs de résistance à l'arrachage humide du papier couché pour chacun des exemples et chacun des essais comparatifs correspondants.

Tableau 4

| | Essai Comparatif (i) | Exemples 1 | 2 | 5 | 9 | 10 | 11 |
|---|---|---|---|---|---|---|---|
| Echantillon non étuvé | 3 | 6 | 3 | 5 | 4 | 3 | 3 |
| Echantillon étuvé | 6 | 10 | 8 | 7 | 8 | 8 | 8 |

Tableau 5

| | Essai Comparatif (ii) | Exemples 3 | 4 | 6 | 7 | 8 |
|---|---|---|---|---|---|---|
| Echantillon non étuvé | 2 | 7 | 4 | 4 | 5 | 3 |
| Echantillon étuvé | 5 | 9 | 7 | 8 | 6 | 5 |

On voit que les compositions aqueuses contenant comme liants les latex d'interpolymère selon l'invention conduisent à un papier couché présentant une meilleure résistance à l'arrachage humide que le papier couché avec des compositions aqueuses contenant comme liants les latex des copolymères A correspondants ou des latex d'interpolymères composés du copolymère A et d'un polymère de styrène.

**Revendications pour les Etats contractants BE CH DE FR GB IT LI LU NL SE**

1. Latex d'interpolymère caractérisés par le fait que ledit interpolymère est composé d'un copolymère A de butadiène, de styrène et d'au moins un acide carboxylique insaturé éthylénique selon des quantités en poids allant de 15 à 85% de butadiène, 5 à 84% de styrène et 1 à 10% d'acide(s) carboxylique(s) insaturé(s) éthylénique(s) et d'un polymère B d'au moins un ester haloalkylique ou haloacétoxyalkylique d'un acide monocarboxylique ou dicarboxylique à insaturation éthylénique et éventuellement d'au moins un composé insaturé éthylénique copolymérisable avec ledit ou lesdits esters selon des quantités en poids allant de 15 à 100% de l'ester haloalkylique et/ou haloacétoxyalkylique, 0 à 85% de composé(s) insaturé(s) éthylénique(s) copolymérisable(s), ledit polymère B étant greffé sur le copolymère A.

2. Latex selon la revendication 1, caractérisés par le fait que l'interpolymère est composé de 85 à 99% en poids de copolymère A et de 15 à 1% en poids de polymère B.

3. Latex selon l'une quelconque des revendications 1 et 2, caractérisés par le fait que l'ester haloalkylique ou haloacétoxyalkylique peut être représenté par la formule générale: RCOOZ dans laquelle:

- Z représente:
  - le radical $-CnH_{2n-m+1}X_m$ dans lequel X représente un atome d'halogène, n est un nombre entier allant de 1 à 6 et m un nombre entier allant de 1 à 5;
  - ou le radical $-(CH_2-CHY)_{n'}-OOC-CH_{(3-m')}X m'$ dans lequel X a la même définition que ci-dessus, n' est un nombre entier de 1 à 4, m' est un nombre entier de 1 à 3 et Y représente un atome d'hydrogène ou un groupe méthyle.

- R représente:
  - un groupement alcényle linéaire ou ramifié en $C_2$-$C_4$
  - un groupement chloroalcényl linéaire ou ramifié en $C_2$-$C_4$;
  - ou un radical -R'-COOZ' où Z' représente un atome d'hydrogène ou le radical Z, R' représente un groupement alcénylène linéaire en $C_2$-$C_4$, un groupement chloroalcénylène en $C_2$-$C_4$ ou un groupement

$$CH_2 = C-CH_2-$$
|

4. Latex selon la revendication 5, caractérisés par le fait que X représente du chlore ou du brome, n est un nombre entier allant de 1 à 4 et m un nombre entier allant de 1 à 3.

5. Latex selon l'une quelconque des revendications 1 à 4, caractérisés par le fait que la partie de l'interpolymère insoluble dans l'alcool isopropylique représente au moins 75% de l'interpolymère et comprend à l'état greffé, 0,2 à 15% en poids de l'ester haloalkylique ou haloalcoxyalkylique.

6. Latex selon l'une quelconque des revendications 1 à 5, caractérisés par le fait que l'acide carboxylique du copolymère A est choisi dans le groupe formé par les acides: acrylique, méthacrylique, crotonique, itaconique, maléique et fumarique ou d'un mélange d'au moins deux de ces acides.

7. Latex selon l'une quelconque des revendications 1 à 6, caractérisés par le fait que le composé copolymérisable avec l'ester haloalkylique ou haloalcoxyalkylique est choisi dans le groupe formé par les composés vinylaromatiques, les halogénures de vinyle, les halogénures de vinylidène, les composés diéniques, les esters vinyliques d'acide carboxylique, les composés arcyliques.

8. Latex selon la revendication 7, caractérisés par le fait que le composé copolymérisable avec l'ester haloalkylique ou haloalcoxyalkylique est choisi dans le groupe formé par le styrène, l'$\alpha$-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, les acides: acrylique, méthacrylique, fumarique, itaconique et les dérivés chlorés de ces acides, l'acrylamide, le méthacrylamide, le nitrile acrylique, le nitrile méthacrylique, le chloroacrylonitrile, l'acétate de vinyle, les esters de l'acide acrylique, les esters de l'acide méthacrylique.

9. Latex selon la revendication 8, caractérisés par le fait que le composé copolymérisable avec l'ester haloalkylique ou haloalcoxyalkylique est choisi dans le groupe formé par l'acrylate de méthyle, l'acrylate d'éthyle, l'acrylate d'hydroxyéthyle, l'acrylate d'hydroxypropyle, l'acrylate de n-butyle, l'acrylate d'isobutyle, le méthacrylate de méthyle, le méthacrylate d'éthyle, le méthacrylate d'hydroxyéthyle, le méthacrylate d'hydroxypropyle, le méthacrylate de n-butyle, le méthacrylate d'isobutyle.

10. Procédé de préparation des latex selon l'une quelconque des revendications 1 à 9, caractérisés par le fait que l'on polymérise en émulsion du butadiène, du styrène et au moins un acide carboxylique insaturé éthylénique copolymérisable pour obtenir un latex de copolymère, puis polymérise, en présence du latex de copolymère, au moins un ester haloalkylique ou haloalcoxyalkylique d'un mono ou diacide carboxylique à insaturation éthylénique, et éventuellement au moins un composé insaturé éthylénique copolymérisable avec l'ester haloalkylique ou haloalcoxyalkylique.

11. Utilisation des latex selon l'une quelconque des revendications 1 à 9 comme liants.

12. Utilisation des latex selon la revendication 11 pour la préparation de compositions aqueuses pour couchage du papier.

**Revendications pour l'Etat contractant AT**

1. Procédé de préparation de latex d'interpolymère caractérisé par le fait que l'on polymérise en émulsion du butadiène, du styrène et au moins un acide carboxylique insaturé éthylénique copolymérisable selon des quantités en poids allant de 15 à 85% de butadiène, 5 à 84% de styrène et 1 à 10% d'acide(s) carboxylique(s) insaturé(s) éthylénique(s) pour obtenir un latex de copolymère A, puis polymérise en présence dudit latex de copolymère A, au moins un ester haloalkylique ou haloalcoxyalkylique d'un mono ou diacide carboxylique à insaturation éthylénique, et éventuellement au moins un composé insaturé éthylénique copolymérisable avec l'ester haloalkylique ou haloalcoxyalkylique, selon des quantités en poids allant de 15 à 100% d'ester(s) haloalkylique(s) et/ou haloacétoxyalkylique(s) et 0 à 85% de composé(s) insaturé(s) éthylénique(s) copolymérisable(s) pour former un polymère B greffé sur ledit copolymère A.

2. Procédé selon la revendication 1 caractérisé en ce que les quantités de monomères sont telles que l'interpolymère formé est composé de 85 à 99% en poids de copolymère A et de 15 à 1% en poids de polymère B.

3. Procédé selon l'une quelconque des revendications 1 et 2, caractérisé par le fait que l'ester haloalkylique ou haloacétoxyalkylique peut être représenté par la formule générale: RCOOZ dans laquelle:

- Z représente:

- le radical $-CnH_{2n-m+1}X_m$ dans lequel X représente un atome d'halogène, n est un nombre entier allant de 1 à 6 et m un nombre entier allant de 1 à 5;

- ou le radical $-(CH_2-CHY)_{n'}-OOC-CH_{(3-m')}X\,m'$ dans lequel X a la même définition que ci-dessus, n' est un nombre entier de 1 à 4, m' est un nombre entier de 1 à 3 et Y représente un atome d'hydrogène ou un groupe méthyle.

- R représente:
- un groupement alcényle linéaire ou ramifié en $C_2$-$C_4$
- un groupement chloroalcényl linéaire ou ramifié en $C_2$-$C_4$;
- ou un radical -R'-COOZ' où Z' représente un atome d'hydrogène ou le radical Z, R' représente un groupement alcénylène linéaire en $C_2$-$C_4$, un groupement chloroalcénylène en $C_2$-$C_4$ ou un groupement

$CH_2 = C-CH_2-$
|

4. Procédé selon la revendication 3, caractérisé par le fait que X représente du chlore ou du brome, n est un nombre entier allant de 1 à 4 et m un nombre entier allant de 1 à 3.

5. Procédé selon l'une quelconque des revendications 1 à 4, caractérisé par le fait que l'acide carboxylique du copolymère A est choisi dans le groupe formé par les acides: acrylique, méthacrylique, crotonique, itaconique, maléique et fumarique ou d'un mélange d'au moins deux de ces acides.

6. Procédé selon l'une quelconque des revendications 1 à 5, caractérisé par le fait que le composé copolymérisable avec l'ester haloalkylique ou haloalcoxyalkylique est choisi dans le groupe formé par les composés vinylaromatiques, les halogénures de vinyle, les halogénures de vinylidène, les composés diéniques, les esters vinyliques d'acide carboxylique, les composés acryliques.

7. Procédé selon la revendication 6, caractérisé par le fait que le composé copolymérisable avec l'ester haloalkylique ou haloalcoxyalkylique est choisi dans le groupe formé par le styrène, l'α-méthylstyrène, le paratertiobutylstyrène, le chlorostyrène, le vinyltoluène, le chlorure de vinyle, le bromure de vinyle, le fluorure de vinyle, le chlorure de vinylidène, le butadiène, l'isoprène, le chloroprène, les acides: acrylique, méthacrylique, fumarique, itaconique et les dérivés chlorés de ces acides, l'acrylamide, le méthacrylamide, le nitrile acrylique, le nitrile méthacrylique, le chloroacrylonitrile, l'acétate de vinyle, les esters de l'acide acrylique, les esters de l'acide méthacrylique.

8. Procédé selon la revendication 7, caractérisé par le fait que le composé copolymérisable avec l'ester haloalkylique ou haloalcoxyalkylique est choisi dans le groupe formé par l'acrylate de méthyle, l'acrylate d'éthyle, l'acrylate d'hydroxyéthyle, l'acrylate d'hydroxypropyle, l'acrylate de n-butyle, l'acrylate d'isobutyle, le méthacrylate de méthyle, le méthacrylate d'éthyle, le méthacrylate d'hydroxyéthyle, le méthacrylate d'hydroxypropyle, le méthacrylate de n-butyle, le méthacrylate d'isobutyle.

9. Utilisation des latex obtenus selon l'une quelconque des revendications 1 à 8 comme liants.

10. Utilisation des latex obtenus selon l'une quelconque des revendications 1 à 8 pour la préparation de compositions aqueuses pour couchage du papier.

**Patentansprüche für die Vertragsstaaten: BE, CH, DE, FR, GB, IT, LI, LU, NL, SE**

1. Interpolymer-Latizes, dadurch gekennzeichnet, dass das Interpolymer aus einem Copolymer A aus Butadien, Styrol und wenigstens einer ethylenisch ungesättigten Carbonsäure in Gewichtsmengen zwischen 15 und 85% Butadien, 5 bis 84% Styrol und 1 bis 10% einer oder mehrerer ethylenisch ungesättigter Carbonsäuren, und aus einem Polymeren B aus mindestens einem Halogenalkyl- oder Halogenacetoxyalkylester einer ethylenisch ungesättigten Mono- und Dicarbonsäure und gegebenenfalls aus mindestens einer mit dem oder den Estern copolymerisierbaren ethylenisch ungesättigten Verbindung in Gewichtsmengen zwischen 15 und 100% Halogenalkyl- und/oder Halogenacetoxyalkylester und 0 bis 85% der copolymerisierbaren, ethylenisch ungesättigten Verbindung oder Verbindungen besteht, wobei das Polymer B auf das Copolymer A gepfropft ist.

2. Latizes nach Anspruch 1, dadurch gekennzeichnet, dass das Interpolymer aus 85 bis 99 Gew.% Copolymer A und 15 bis 1 Gew.% Polymer B zusammengesetzt ist.

3. Latizes nach Anspruch 1 oder 2, dadurch gekennzeichnet, dass der Halogenalkyl- oder Halogenacetoxyalkylester durch die allgemeine Formel RCOOZ dargestellt werden kann, in der

Z bedeutet:

- das Radikal $-C_nH_{2n-m+1}X_m$, wobei X ein Halogenatom, n eine ganze Zahl zwischen 1 und 6 und m eine ganze Zahl zwischen 1 und 5 ist,
- oder das Radikal $-(CH_2-CHY)_{n'}-OOC-CH_{(3-m')}X_{m'}$, wobei X die oben gegebene Definition besitzt, n′ eine ganze Zahl zwischen 1 und 4, m′ eine ganze Zahl zwischen 1 und 3, und Y ein Wasserstoffatom oder eine Methylgruppe ist,

R bedeutet:

- eine lineare oder verzweigte $C_2$–$C_4$-Alkenylgruppe,
- eine lineare oder verzweigte $C_2$–$C_4$-Chloralkenylgruppe
- oder ein Radikal -R′-COOZ′, wobei Z′ ein Wasserstoffatom oder das Radikal Z, R′ eine lineare $C_2$–$C_4$-Alkenylengruppe, eine $C_2$–$C_4$-Chloralkenylengruppe oder eine Gruppierung

$CH_2=C-CH_2-$
|

bedeutet.

4. Latizes nach Anspruch 3, dadurch gekennzeichnet, dass X Chlor oder Brom, n eine ganze Zahl zwischen 1 und 4, und m eine ganze Zahl zwischen 1 und 3 ist.

5. Latizes nach einem der Ansprüche 1 bis 4, dadurch gekennzeichnet, dass der Teil des Interpolymeren, der in Isopropylalkohol unlöslich ist, mindestens 75% des Interpolymeren beträgt und in gepfropftem Zustand 0,2 bis 15 Gew.% des Halogenalkyl- oder Halogenalkoxyalkylesters umfasst.

6. Latizes nach einem der Ansprüche 1 bis 5, dadurch gekennzeichnet, dass die Carbonsäure des Copolymeren A ausgewählt wird aus der Gruppe, die von den Säuren gebildet wird: Acryl-, Methacryl-, Croton-, Itacon-, Malein- und Fumarsäure, oder einer Mischung von mindestens zweien dieser Säuren.

7. Latizes nach einem der Ansprüche 1 bis 6, dadurch gekennzeichnet, dass die mit dem Halogenalkyl- oder Halogenalkoxyalkylester copolymerisierbare Verbindung ausgewählt wird aus der Gruppe, die gebildet wird von den vinylaromatischen Verbindungen, den Vinylhalogeniden, den Vinylidenhalogeniden, die Dienverbindungen, den Vinylestern von Carbonsäuren und den Acrylverbindungen.

8. Latizes nach Anspruch 7, dadurch gekennzeichnet, dass die mit dem Halogenalkyl- oder Halogenalkoxyalkylester copolymerisierbare Verbindung ausgewählt wird aus der Gruppe, die gebildet wird von Styrol, α-Methylstyrol, Paratertiärbutylstyrol, Chlorstyrol, Vinyltoluol, Vinylchlorid, Vinylbromid, Vinylfluorid, Vinylidenchlorid, Butadien, Isopren, Chloropren, Acryl-, Methacryl-, Fumar-, Itaconsäure, den Chlorderivaten dieser Säuren , Acrylamid, Methacrylamid, Acrylnitril, Methacrylnitril-, Chloracrylnitril, Vinylacetat, den Estern von Acrylsäure, und den Estern von Methacrylsäure.

9. Latizes nach Anspruch 8, dadurch gekennzeichnet, dass die mit dem Halogenalkyl- oder Halogenalkoxyalkylester copolymerisierbare Verbindung ausgewählt wird aus der Gruppe, die gebildet wird von Methylacrylat, Ethylacrylat, Hydroxyethylacrylat, Hydroxypropylacrylat, n-Butylacrylat, Isobutylacrylat, Methylmethacrylat, Ethylmethacrylat, Hydroxyethylmethacrylat, Hydroxypropylmethacrylat, n-Butylmethacrylat und Isobutylmethacrylat.

10. Verfahren zur Herstellung der Latizes nach einem der Ansprüche 1 bis 9, dadurch gekennzeichnet, dass man in Emulsion Butadien, Styrol und mindestens eine ethylenisch ungesättigte copolymerisierbare Carbonsäure zu einem Copolymer-Latex polymerisiert, und dann in Gegenwart des Copolymer-Latex mindestens einen Halogenalkyl- oder Halogenalkoxyalkylester einer ethylenisch ungesättigten Mono- oder Dicarbonsäure und gegebenenfalls mindestens eine ethylenisch ungesättigte, mit dem Halogenalkyl- oder Halogenalkoxyester copolymerisierbare Verbindung polymerisiert.

11. Verwendung der Latizes nach einem der Ansprüche 1 bis 9 als Bindemittel.

12. Verwendung der Latizes nach Anspruch 11 zur Herstellung von wässrigen Zusammensetzungen zur Papierbeschichtung.

**Patentansprüche für den Vertragsstaat: AT**

1. Verfahren zur Herstellung von Interpolymer-Latizes, dadurch gekennzeichnet, dass man in Emulsion Butadien, Styrol und mindestens eine ethylenisch ungesättigte, copolymerisierbare Carbonsäure in Mengen zwischen 15 und 85

Gew.% Butadien, 5 bis 84 Gew.% Styrol und 1 bis 10 Gew.% der ethylenisch ungesättigten Carbonsäure oder -säuren zu einem Latex aus dem Copolymeren A polymerisiert, dass man dann in Gegenwart des genannten Copolymer A-Latex wenigstens einen Halogenalkyl- oder Halogenalkoxyalkylester einer ethylenisch ungesättigten Mono- oder Dicarbonsäure und gegebenenfalls wenigstens eine ethylenisch ungesättigte, mit dem Halogenalkyl- oder Halogenalkoxyalkylester copolymerisierbare Verbindung in Mengen von 15 bis 100 Gew.% des Halogenalkyl- und/oder Halogenacetoxyalkylesters oder der Ester und 0 bis 85 Gew.% der ethylenisch ungesättigten copolymerisierbaren Verbindung oder Verbindungen polymerisiert, um ein Polymer B zu bilden, das auf das genannte Copolymer A gepfropft ist.

2. Verfahren nach Anspruch 1, dadurch gekennzeichnet, dass die Monomermengen so sind, dass das gebildete Interpolymere aus 85 bis 99 Gew.% Copolymer A und 15 bis 1 Gew.% Polymer B zusammengesetzt ist.

3. Verfahren nach Anspruch 1 oder 2, dadurch gekennzeichnet, dass der Halogenalkyl- oder Halogenacetoxyalkylester durch die allgemeine Formel RCOOZ beschrieben wird, in der

– Z bedeutet:

– das Radikal $-C_nH_{2n-m+1}X_m$, wobei X ein Halogenatom, n eine ganze Zahl zwischen 1 und 6 und m eine ganze Zahl zwischen 1 und 5 ist;

– oder das Radikal $-(CH_2-CHY)_{n'}-OOC-CH_{(c-m')}X_{m'}$, wobei X die oben angegebene Bedeutung besitzt, n' eine ganze Zahl zwischen 1 und 4, m' eine ganze Zahl zischen 1 und 3, und Y ein Wasserstoffatom oder eine Methylgruppe ist;

– R bedeutet:

– eine lineare oder verzweigte $C_2$-$C_4$-Alkenylgruppe,

– eine lineare oder verzweigte $C_2$-$C_4$-Chloralkenylgruppe,

– oder ein Radikal -R'-COOZ', wobei Z' ein Wasserstoffatom oder das Radikal Z ist, und R' eine lineare $C_2$-$C_4$-Alkenylengruppe, eine $C_2$-$C_4$-Chloroalkenylengruppe oder eine Gruppierung

$$CH_2=\underset{|}{C}-CH_2-$$

bedeutet.

4. Verfahren nach Anspruch 3, dadurch gekennzeichnet, dass X Chlor oder Brom, n eine ganze Zahl zwischen 1 und 4, und m eine ganze Zahl zwischen 1 und 3 ist.

5. Verfahren nach einem der Ansprüche 1 bis 4, dadurch gekennzeichnet, dass die Carbonsäure des Copolymeren A ausgewählt wird aus der Gruppe, die gebildet wird von den Säuren: Acryl-, Methacryl-, Croton-, Itacon-, Malein- und Fumarsäure, oder einer Mischung von wenigstens zwei dieser Säuren.

6. Verfahren nach einem der Ansprüche 1 bis 5, dadurch gekennzeichnet, dass die mit dem Halogenalkyl- oder Halogenalkoxyalkylester copolymerisierbare Verbindung ausgewählt wird aus der Gruppe, die gebildet wird von den vinylaromatischen Verbindungen, den Vinylhalogeniden, den Vinylidenhalogeniden, den Dienverbindungen, den Carbonsäurevinylestern und den Acrylverbindungen.

7. Verfahren nach Anspruch 6, dadurch gekennzeichnet, dass die mit dem Halogenalkyl- oder Halogenalkoxyalkylester copolymerisierbare Verbindung ausgewählt wird aus der Gruppe, die gebildet wird von Styrol, α-Methylstyrol, Paratertiärbutylstyrol, Chlorstyrol, Vinyltoluol, Vinylchlorid, Vinylbromid, Vinylfluorid, Vinylidenchlorid, Butadien, Isopren, Chloropren, Acryl-, Methacryl-, Fumar-, Itaconsäure, den Chlorderivaten dieser Säuren , Acrylamid, Methacrylamid, Acrylnitril, Methacrylnitril-, Chloracrylnitril, Vinylacetat, den Acrylsäureestern, und den Methacrylsäureestern.

8. Verfahren nach Anspruch 7, dadurch gekennzeichnet, dass die mit dem Halogenalkyl- oder Halogenalkoxyalkylester copolymerisierbare Verbindung ausgewählt wird aus der Gruppe, die gebildet wird von Methylacrylat, Ethylacrylat, Hydroxyethylacrylat, Hydroxypropylacrylat, n-Butylacrylat, Isobutylacrylat, Methylmethacrylat, Ethylmethacrylat, Hydroxyethylmethacrylat, Hydroxypropylmethacrylat, n-Butylmethacrylat, Isobutylmethacrylat.

9. Verwendung der nach einem der Ansprüche 1 bis 8 erhältlichen Latizes als Bindemittel.

10. Verwendung der nach einem der Ansprüche 1 bis 8 erhältlichen Latizes zur Herstellung von wässrigen Zusammensetzungen zur Papierbeschichtung.

**Claims for the Contracting States BE CH DE FR GB IT LI LU NL SE**

1. Interpolymer latexes characterised in that said interpolymer is composed of a copolymer A of butadiene, styrene, and at least one ethylenic unsaturated carboxylic acid in amounts by weight ranging from 15 to 85% of butadiene, from 5 to 84% of styrene and from 1 to 10% of ethylenic unsaturated carboxylic acid or acids, and a polymer B of at least one haloalkyl or haloacetoxyalkyl ester of an ethylenically unsaturated monocarboxylic acid or dicarboxylic acid, and optionally at least one ethylenic unsaturated compound which is copolymerisable with said ester or esters in amounts by weight ranging from 15 to 100% of the haloalkyl and/or haloacetoxyalkyl ester, and from 0 to 85% of copolymerisable ethylenic unsaturated compound or compounds, said polymer B being grafted on the copolymer A.

2. Latexes according to claim 1 characterised in that the interpolymer is composed of from 85 to 99% by weight of copolymer A and from 15 to 1% by weight of polymer B.

3. Latexes according to either one of claims 1 and 2 characterised in that the haloalkyl or haloacetoxyalkyl ester may be represented by the general formula: RCOOZ in which:

- Z represents:

- the radical $-C_nH_{2n-m+1}X_m$ in which X represents a halogen atom, n is an integer ranging from 1 to 6 and m is an integer ranging from 1 to 5; or

- the radical $-(CH_2-CHY)_{n'}-OOC-CH_{(3-m')}X_{m'}$, in which X is as defined above, n' is an integer of from 1 to 4, m' is an integer of from 1 to 3 and Y represents a hydrogen atom or a methyl group, and

- R represents:

- a straight or branched chain $C_2$–$C_4$ alkenyl group,

- a straight or branched chain $C_2$–$C_4$ chloroalkenyl group, or

- a radical -R'-COOZ' in which Z' represents a hydrogen atom or the radical Z, R' represents a straight chain $C_2$–$C_4$ alkenylene group, a $C_2$–$C_4$ chloroalkenylene group or a group

$$CH_2 = \underset{|}{C}-CH_2-.$$

4. Latexes according to claim 3 characterised in that X represents chlorine or bromine, n is an integer ranging from 1 to 4 and m is an integer ranging from 1 to 3.

5. Latexes according to any one of claims 1 to 4 characterised in that the part of the interpolymer which is insoluble in isopropyl alcohol represents at least 75% of the interpolymer and comprises, in the grafted state, 0.2 to 15% by weight of the haloalkyl or haloacetoxyalkyl ester.

6. Latexes according to any one of claims 1 to 5 characterised in that the carboxylic acid of copolymer A is selected from the group formed by the following acids: acrylic, methacrylic, crotonic, itaconic, maleic and fumaric acid or a mixture of at least two of said acids.

7. Latexes according to any one of claims 1 to 6 characterised in that the compound which is copolymerisable with the haloalkyl or haloacetoxyalkyl ester is selected from the group formed by vinylaromatic compounds, vinyl halides, vinylidene halides, dienic compounds, vinyl esters of carboxylic acid and acrylic compounds.

8. Latexes according to claim 7 characterised in that the compound which is copolymerisable with the haloalkyl or haloacetoxyalkyl ester is selected from the group formed by styrene, α-methyl styrene, paratertiobutyl styrene, chloro styrene, vinyl toluene, vinyl chloride, vinyl bromide, vinyl fluoride, vinylidene chloride, butadiene, isoprene, chloroprene, the acids: acrylic, methacrylic, fumaric and itaconic acids and the chlorinated derivatives of said acids, acrylamide, methacrylamide, acrylonitrile, methacrylonitrile, chloroacrylonitrile, vinyl acetate, esters of acrylic acid and esters of methacrylic acid.

9. Latexes according to claim 8 characterised in that the compound which is copolymerisable with the haloalkyl or haloacetoxyalkyl ester is selected from the group formed by methyl acrylate, ethyl acrylate, hydroxyethyl acrylate, hydroxypropyl acrylate, n-butyl acrylate, isobutyl acrylate, methylmethacrylate, ethylmethacrylate, hydroxyethylmethacrylate, hydroxypropylmethacrylate, n-butylmethacrylate and isobutylmethacrylate.

10. A process for the preparation of the latexes according to any one of claims 1 to 9 characterised by emulsion polymerisation of butadiene, styrene and at least one copolymerisable ethylenic unsaturated carboxylic acid to produce a copolymer latex, and then polymerisation in the presence of the copolymer latex of at least one haloalkyl or haloacetoxyalkyl ester of an ethylenically unsaturated monocarboxylic acid or dicarboxylic acid and optionally at least one ethylenic unsaturated compound copolymerisable with the haloalkyl or haloacetoxyalkyl ester.

11. Use of the latexes according to any one of the claims 1 to 9 as binders.

12. Use of the latexes according to claim 11 for the preparation of aqueous compositions for coating paper.

**Claims for the Contracting State AT**

1. A process for the preparation of interpolymer latexes characterised by emulsion polymerisation of butadiene, styrene and at least one copolymerisable ethylenic unsaturated carboxylic acid in amounts by weight ranging from 15 to 85% of butadiene, from 5 to 84% of styrene and from 1 to 10% of ethylenic unsaturated carboxylic acid or acids to produce a latex of copolymer A, then polymerisation in the presence of said latex of copolymer A of at least one haloalkyl or haloacetoxyalkyl ester of an ethylenically unsaturated monocarboxylic acid or dicarboxylic acid and optionally at least one ethylenic unsaturated compound which is copolymerisable with the haloalkyl or haloacetoxyalkyl ester, in amounts by weight ranging from 15 to 100% of haloalkyl and/or haloacetoxyalkyl ester or esters and from 0 to 85% of copolymerisable ethylenic unsaturated compound or compounds, to form a polymer B which is grafted on said copolymer A.

2. A process according to claim 1 characterised in that the amounts of monomers are such that the interpolymer formed is composed of from 85 to 99% by weight of copolymer A and from 15 to 1% by weight of polymer B.

3. A process according to any one of claims 1 and 2 characterised in that the haloalkyl or haloacetoxyalkyl ester may be represented by the general formula: RCOOZ in which:

- Z represents:

- the radical $-C_nH_{2n-m+1}X_m$ in which X represents a halogen atom, n is an integer ranging from 1 to 6 and m is an integer ranging from 1 to 5; or

- the radical $-(CH_2-CHY)_{n'}-OOC-CH_{(3-m')}X_{m'}$, in which X is as defined above, n' is an integer of from 1 to 4, m' is an integer of from 1 to 3 and Y represents a hydrogen atom or a methyl group, and

– R represents:

– a straight or branched chain $C_2$–$C_4$ alkenyl group,

– a straight or branched chain $C_2$–$C_4$ chloroalkenyl group, or

– a radical –R′–COOZ′ in which Z′ represents a hydrogen atom or the radical Z, R′ represents a straight chain $C_2$–$C_4$ alkenylene group, a $C_2$–$C_4$ chloroalkenylene group or a group

$$CH_2 = \underset{|}{C}{-}CH_2{-}.$$

4. A process according to claim 3 characterised in that X represents chlorine or bromine, n is an integer ranging from 1 to 4 and m is an integer ranging from 1 to 3.

5. A process according to any one of claims 1 to 4 characterised in that the carboxylic acid of copolymer A is selected from the group formed by the following acids: acrylic, methacrylic, crotonic, itaconic, maleic and fumaric acid or a mixture of at least two of said acids.

6. A process according to any one of claims 1 to 5 characterised in that the compound which is copolymerisable with the haloalkyl or haloacetoxyalkyl ester is selected from the group formed by vinylaromatic compounds, vinyl halides, vinylidene halides, dienic compounds, vinyl esters of carboxylic acid and acrylic compounds.

7. A process according to claim 6 characterised in that the compound which is copolymerisable with the haloalkyl or haloacetoxyalkyl ester is selected from the group formed by styrene, α-methyl styrene, paratertiobutyl styrene, chloro styrene, vinyl toluene, vinyl chloride, vinyl bromide, vinyl fluoride, vinylidene chloride, butadiene, isoprene, chloroprene, the acids: acrylic, methacrylic, fumaric and itaconic acids and the chlorinated derivatives of said acids, acrylamide, methacrylamide, acrylonitrile, methacrylonitrile, chloroacrylonitrile, vinyl acetate, esters of acrylic acid and esters of methacrylic acid.

8. A process according to claim 7 characterised in that the compound which is copolymerisable with the haloalkyl or haloacetoxyalkyl ester is selected from the group formed by methyl acrylate, ethyl acrylate, hydroxyethyl acrylate, hydroxypropyl acrylate, n-butyl acrylate, isobutyl acrylate, methylmethacrylate, ethylmethacrylate, hydroxyethylmethacrylate, hydroxypropylmethacrylate, n-butylmethacrylate and isobutylmethacrylate.

9. Use of the latexes produced in accordance with any one of claims 1 to 8 as binding agents.

10. Use of the latexes produced in accordance with any one of claims 1 to 8 for the preparation of aqueous compositions for coating paper.